# EUROPEAN PATENT APPLICATION

(11) **EP 2 624 022 A1**
(43) Date of publication of application: **07.08.2013**
(21) Application number: 11828742.4
(22) Date of filing: 08.09.2011
(51) Int. Cl.: G02B 5/08, B32B 3/30, B32B 5/18, B32B 7/02, F21V 7/00, G02F 1/13357

(54) **REFLECTING BASE MATERIAL, BACKLIGHT UNIT, AND METHOD FOR MANUFACTURING REFLECTING BASE MATERIAL**

(30) Priority: 27.09.2010 JP 2010215750
(71) Applicant: Furukawa Electric Co., Ltd., Chiyoda-ku Tokyo 100-8322 (JP)
(72) Inventor: NISHIWAKI, Toshimitsu, Tokyo 100-8322 (JP); MORITA, Nobuyuki, Tokyo 100-8322 (JP); ISHIKAWA, Akihiko, Tokyo 100-8322 (JP); YAMANE, Motohiro, Tokyo 100-8322 (JP); HAYASHI, Daisuke, Tokyo 100-8322 (JP); KAWAI, Koichi, Tokyo 100-8322 (JP); SATOH, Yusuke, Tokyo 100-8322 (JP)
(74) Representative: Buchetmann, Dominik
(86) International application number: PCT/JP2011/070446
(87) International publication number: WO 2012/043181

(57) **Abstract**

A reflecting base material that can reliably prevent the occurrence of uneven brightness, a backlight unit that uses the same, and a method for manufacturing the same are provided. Surface profile information of the reflecting base material 7 is obtained by a laser displacement gauge 3. Next, the unevenness information obtained is subjected to Fourier transform, and the relationship between frequency and intensity for the surface unevenness profile of the reflecting base material is obtained. Next, the calculated relationship between the frequency and intensity is compared with a preset standard data. When the intensity exceeds 0.6 at a predetermined range of frequency domain, a judgment of rejection is made; when no data exceeding 0.6 exists in said judgment domain, a judgment of acceptance is made.

## Description

### Technical Field

In a reflecting base material that is especially used in the backlight unit of liquid crystal television etc., the present invention relates to a reflecting base material, which does not cause uneven brightness and is easy to produce, a backlight unit using the same, and a method for manufacturing a reflecting base material.

### Background Art

In a backlight unit used in displays of liquid crystal television etc., a reflecting base material in sheet form, film form, or plate form, which reflects light against a light guiding panel, is used. In this case, the reflecting base material is placed at the back of the light guiding panel, and light is emitted from the side of the light guiding panel by, for example, an edge-light method, thereby shining light evenly on the entire surface of the light guiding panel (i.e. the entire surface of the display).

On the other hand, if a problem exists in a member (such as reflecting base material), uneven brightness may occur in the display. Uneven brightness is the occurrence of parts with higher brightness or lower brightness, in a case where even brightness should be observed throughout the entire surface of the display. When such uneven brightness occurs, accurate image cannot be reproduced, and causes a sense of displeasure to the viewer of said display.

For such uneven brightness of display, a method of evaluating display, which comprises
producing a contrast image that expresses the ratio of background brightness to change in brightness obtained from the difference between the brightness distribution information and the background brightness of this brightness distribution information, wherein said brightness distribution information is obtained for the viewing area of the display;
multiplying a contrast sensitivity function equivalent to human visual features set in accordance to at least either the background brightness or size of viewing area, to a two-dimensional Fourier spectrum obtained by subjecting said contrast image to a two-dimensional Fourier transform;
subjecting the result to a two-dimensional Fourier inverse transform to produce a two-dimensional image for evaluation, which includes, in the brightness information, the intensity of the uneven brightness component ; and
quantitatively evaluating uneven brightness based on the brightness information of this two-dimensional image for evaluation.

### Prior Art Documents

### Patent Documents

Patent Document 1: JP-A-2009-180583

### Summary of the Invention

### Technical Problem

However, the method of patent document 1 is not one to specify the property of the reflecting base material itself, and quantitatively evaluates uneven brightness after it is actually assembled. Therefore, it does not specify what property of the reflecting base material has an adverse affect on uneven brightness.

On the other hand, when wrinkles etc. are formed on the surface of the reflecting base material, the unevenness profile on the surface caused by such "wrinkles" can lead to the occurrence of uneven brightness. That is, by using a reflecting base material that has more than a certain degree of unevenness profile on the surface to assemble a backlight unit, uneven brightness may be detected.

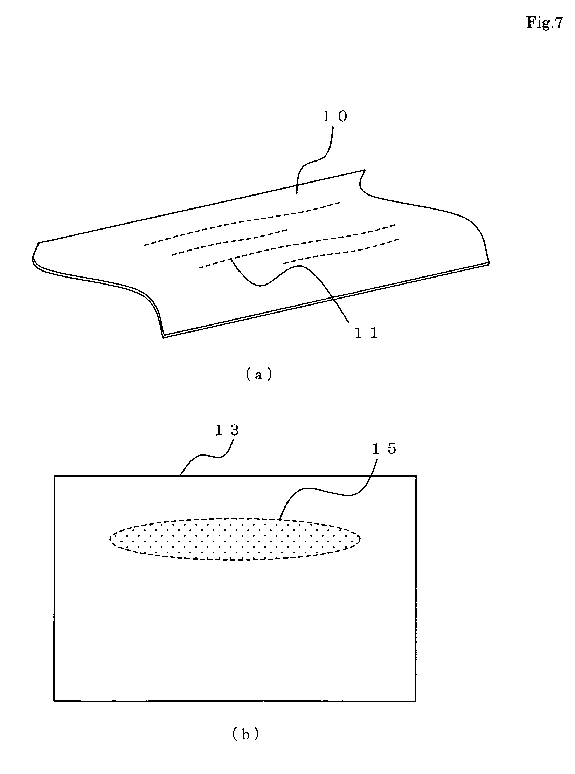

For example, in Fig.7, a display 13 that utilizes a conventional reflecting base material 10 is shown. As shown in Fig.7(a), unevenness 11 may form on the surface of reflecting base material 10 during its production process. Especially for foam base materials, because there is a heating process, there is a case where wrinkly unevenness 11 is formed on the surface of the reflecting base material 10. Such unevenness 11 is, for example, often formed along the longitudinal direction of the reflecting base material 10 during its production process.

When such unevenness 11 becomes larger than a certain degree, it may become a contributory factor for uneven brightness. For example, when such reflecting base material 10 is used to construct a backlight unit, and light is irradiated to it and checked from the front side of the display, uneven brightness 15 may occur at areas corresponding to the configuration of the unevenness 11. Thus, it may be possible to prevent the occurrence of uneven brightness by measuring the amount of surface unevenness of the reflecting base material before assembling it as a backlight unit, and disposing those with unevenness larger than a predetermined value. However, in reality, the simple amount of unevenness does not completely correspond to the occurrence of uneven brightness. Therefore, there were problems such as uneven brightness being found in the production process, or excessive control of the amount of unevenness being necessary.

The present invention was made in view of such problems, and its object is to provide a reflecting base material that can reliably prevent the occurrence of uneven brightness, a backlight unit that uses the same, and a method for manufacturing the same.

### Means to Solve the Problem

In order to attain the aforementioned object, the present invention provides a reflecting base material for a backlight unit, wherein the intensity of the wave component with a wavelength of 128 mm or less is 0.6N/128 or less, when a plurality of points in the width direction of the reflecting base material is measured to obtain surface unevenness data, which is then Fourier transformed, thereby obtaining the relationship between frequency and intensity, and the number of points measured is N.

In said reflecting base material, the maximum unevenness amount for said surface unevenness data is preferably less than or equal to 50 µm. Said reflecting base material preferably contains fine bubbles inside, has a thickness of 0.2 mm or more, a reflectivity of 90% or more, and a crystallinity of 30% or more. Said reflecting base material may have soft beads applied on to its surface.

According to the first invention, a reflecting base material that is easy to produce and is reliable in preventing the occurrence of uneven brightness can be obtained. Specifically, since instead of judging by the simple amount of surface unevenness, the unevenness profile is treated as a wave, and the wave that causes uneven brightness is identified, the quality does not become excessive, either.

Further, if the maximum unevenness amount for the surface unevenness data is less than or equal to 50 µm, the occurrence of uneven brightness is prevented with more certainty. Furthermore, as the reflecting base material of the present invention, a foam reflecting base material that contains fine bubbles inside, that has a thickness of 0.2 mm or more, a reflectivity of 90% or more, and a crystallinity of 30% or more, is especially effective. By applying soft beads evenly on to its surface, the gap between it and the light guiding panel can be maintained constant, thus being further effective in preventing uneven brightness. As for the soft beads, for example, hard materials such as glass and polymethylmethacrylate (PMMA), and soft materials such as polybutylmethacrylate (PBMA) can be used.

The second invention is a backlight unit, which comprises the reflecting base material of the first invention, a light guiding panel provided on said reflecting base material, and a light source provided lateral to said light guiding panel:

According to the second invention, a backlight unit that can be produced easily without the occurrence of uneven brightness is provided.

The third invention is a method for manufacturing a foam reflecting base material for a backlight unit, which comprises: a process of foaming a base material, and a process for stretching at a stretching degree of 1.1 to 1.8, while at the same time compressing at a compression degree of 0.6 to 0.8; wherein said base material is determined as accepted when a surface unevenness information is obtained by measuring a plurality of points in the width direction of the base material obtained, the surface unevenness information obtained is Fourier transformed to obtain a relationship between frequency and intensity, and the intensity for the frequency corresponding to a wavelength of 128 mm or less for N points, which is the number of points measured, are all less than or equal to 0.6N/128.

According to the third invention, a reflecting base material that reliably prevents the occurrence of uneven brightness can be produced.

### Effect of the Invention

According to the present invention, a reflecting base material that reliably prevents the occurrence of uneven brightness, a backlight unit using the same, and a method for manufacturing a reflecting base material can be provided.

### Description of Drawings

Fig. 1: A configuration diagram for the reflecting base material production apparatus.
Fig. 2: A flowchart that shows the analysis flow of the reflecting base material.
Fig. 3: A figure that shows the measuring part of the laser displacement gauge 3 against the reflecting base material 7.
Fig. 4: A figure that shows unevenness information.
Fig. 5: A figure that shows the behavior of the laser displacement gauge against the reflecting base material 7.
Fig. 6: A figure that shows wave information.
Fig. 7: A figure that shows a conventional reflecting base material and the occurrence of uneven brightness.

### Best Mode for Carrying out the Invention

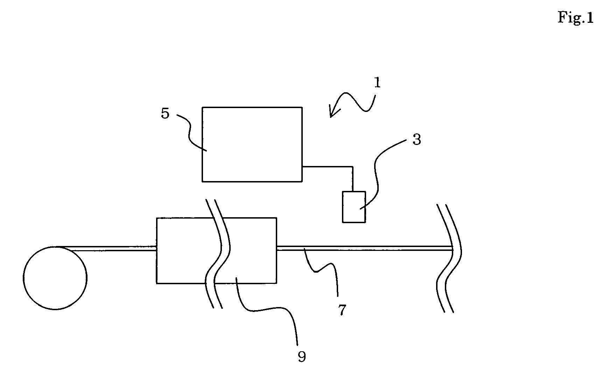

Hereinafter, embodiments of the present invention will be described with reference to the figures. Fig.1 is a configuration diagram of the reflecting base material production apparatus 1 relative to the present invention. The reflecting base material production apparatus 1 is mainly composed of a laser displacement gauge 3, which is a means to detect the amount of unevenness, an analyzing apparatus 5, and a stretching and compressing line 9.

The reflecting base material 7 is preferably a resin base material such as foam, and is formed as a sheet, film, or plate. The thickness of the reflecting base material 7 is preferably 0.2 mm or more. Further, the crystallinity is preferably 30% or more. If the thickness is less than 0.2 mm or the crystallinity is less than 30%, it is not desirable, since each are soft states, which can easily generate wavy wrinkles. Furthermore, to maintain properties of the reflecting base material, the total reflectivity of the reflecting base material is preferably 90% or more.

More specifically, it can be favorably applied to a thermoplastic resin sheet that contains fine bubbles with an average bubble size of 50 nm or more to 50 µm or less, or pores. Such sheet can be, for example, a foam plastic reflective sheet with an internal bubble size of 50 µm or less, obtained by infiltrating carbon dioxide into an extruded sheet of polyethylene terephthalate under high pressure, then heating and foaming (such as MCPET (registered trademark) by Furukawa Electric Co. Ltd.).

Further, another favorable example of the reflecting base material 7 is a thermoplastic resin film containing fillers, wherein multiple films with a plurality of voids that are formed with the filler as their core are laminated, or that with said film affixed on a resin sheet such as polyethylene terephthalate. The above-mentioned thermoplastic resin containing filler is desirably a porous stretched film, obtained by forming an unstretched film containing fillers, and stretching this unstretched film to form a plurality of voids with the fillers as cores.

Here, when the reflecting base material 7 is a foam base material, a foaming and heating line, which is not shown in the figure, is further installed to the reflecting base material production apparatus 1. Further, in the resin used for the aforementioned sheet and film, various additives such as an antioxidant, an ultraviolet inhibitor, a lubricant, a pigment, and a toughening agent, may be added accordingly. Further, a coating layer containing such additives may be formed on the sheet or film. In the example shown in Fig.1, an example with the laser displacement gauge 3 etc. installed for a long base material rolled in roll form is shown; however, analyzing apparatus 5 and laser displacement gauge 3 may be installed after the cutting process, which is abbreviated in the figure, and the measurement by the laser displacement gauge 3 may be performed on the reflecting base material 7 after cutting. In this case, the term reflecting base material production apparatus 1 refers to the entirety including the cutting process and measuring process by said laser displacement gauge.

In the stretching/compressing line, in order to remove wrinkles etc. from the base material, a given amount of tension is added on the longitudinal direction of the base material, while pressure is added on the thickness direction by a plurality of rollers. The degree of compression (thickness after compression/thickness before compression) of the base material is preferably about 0.6 to 0.8. If the degree of compression is less than 0.6, the internal bubbles are crushed too much and the number of internal bubbles becomes small, which is not desirable since it decreases the reflectivity; if the degree of compression is more than or equal to 0.8, the wavy wrinkle suppression effect by compression decreases, and is thus not desirable.

Furthermore, as for the degree of stretching (length after stretching/length before stretching) of the base material, it should preferably be about 1.1 to 1.8. If the degree of stretching is less than 1.1, the wavy wrinkle suppression effect by stretching decreases and is thus not desirable. If the degree of stretching is more than or equal to 1.8, the internal bubbles are crushed too much and the number of internal bubbles becomes small, which is not desirable since it decreases the reflectivity.

The laser displacement gauge 3 is installed at a given distance from the surface of the reflecting base material 7, and can move in a direction vertical to the traveling direction of the reflecting base material 7 (i.e. the direction of the width of the reflecting base material 7), while maintaining a constant distance from the surface of the reflecting base material. Therefore, the unevenness (the amount of unevenness on the surface direction of the entire reflecting base material, including "wrinkles" and change in thickness etc.) of the surface of the reflecting base material 7 of interest is detectable by the laser displacement gauge 3. Here, other means of detection, other than laser displacement gauge 3, may be used as long as it can detect unevenness information of the reflecting base material 7.

The analyzing apparatus 5 obtains information from the laser displacement gauge 3, and can perform various analysis and judgment of acceptance and rejection, while also controlling the behavior of the laser displacement gauge 3. As the analyzing apparatus, a regular computer may be used.

For example, analyzing apparatus 5 controls the behavior of laser displacement gauge 3, measures the amount of unevenness for the reflective substance 7 while performing the later-described calculations, makes judgment on the acceptance or rejection of the reflecting base material 7, and memorizes/displays information etc.

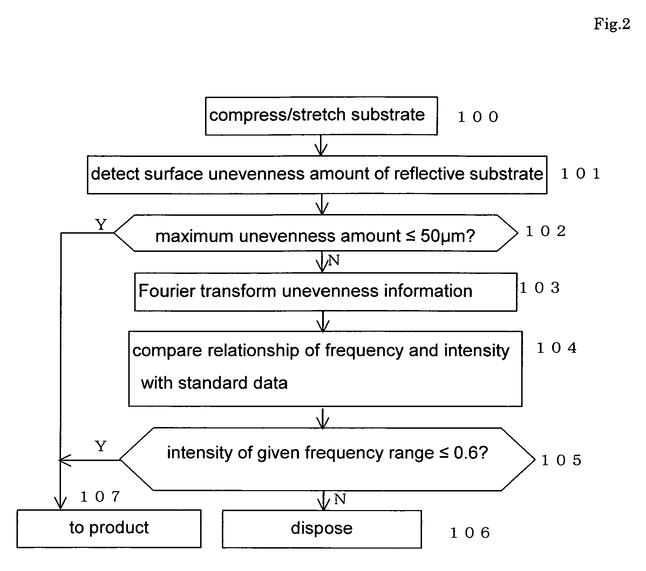

Next, the production process of reflecting base material 7 will be described by the reflecting base material production apparatus 1. Fig.2 is a figure that shows a flow chart describing the flow of the production of reflecting base material 7. First, as mentioned above, the base material is uncoiled as stretching and compressing of a given amount is performed in the stretching/compressing line 9 (step 100). Here, a foaming and heating process may be added as required.

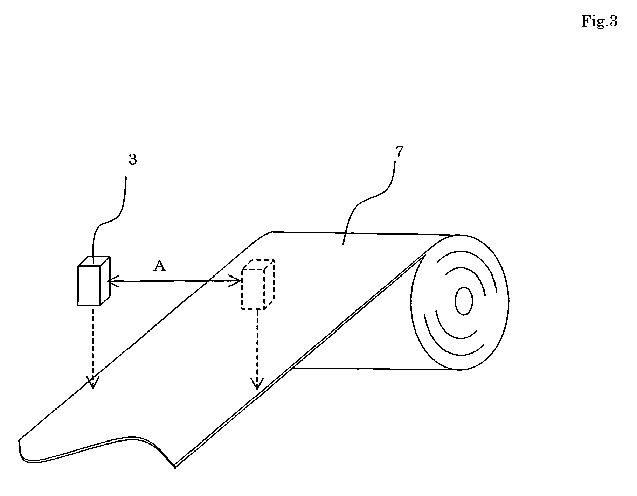

Next, as shown in Fig.3, laser displacement gauge 3 is moved along the direction of the width of the reflecting base material 7, or moved back and forth, to detect the amount of surface unevenness of the reflecting base material 7 (step 101). Here, the amount of surface unevenness does not refer to the simple change in thickness of reflecting base material 7, but includes wrinkles and deformities occurring on the reflecting base material itself. The reason why the detection is performed along the direction of the width and not the production direction of the reflecting base material 7 is because, due to the production process, surface unevenness (such as wrinkles) tends to occur more largely toward the direction of the width.

Specifically, by moving the laser displacement gauge 3 above the reflecting base material 7 by a driving part, which is abbreviated in the figure, the surface profile information (unevenness information) of the reflecting base material 7 is obtained by the laser displacement gauge 3. The unevenness information is obtained by measuring a plurality of points at a given interval along the direction of the width of the reflecting base material 7. As for the traveling speed of the laser displacement gauge 3, it is set and controlled in accordance to the production speed etc. of the reflecting base material 7.

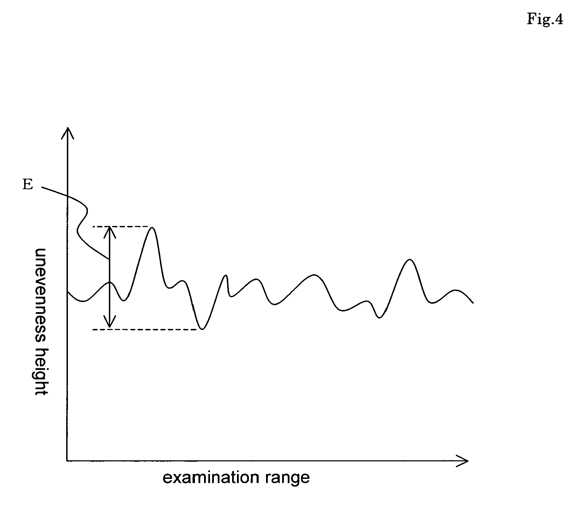

Next, from the unevenness information obtained, the maximum unevenness amount is calculated, and whether or not this amount exceeds a standard value is judged (step 102). As for the standard value, it is set suitably in accordance to the quality required for the product. Fig.4 is a conceptual diagram of the obtained unevenness information. As shown in Fig. 4, from the unevenness information obtained for the examination range (for example, the traveling range along the width of the reflecting base material 7), the maximum and minimum values are obtained, and the difference between these values are calculated as the maximum unevenness amount (E in the figure).

That is, the maximum unevenness amount is calculated from the maximum value and the minimum value of the unevenness information, compared to a predetermined standard value (for example, 50 µm), and whether or not the maximum unevenness amount exceeds the standard value is judged. As for said standard value of maximum unevenness amount, by examining the maximum unevenness amount and the tendency of the occurrence of uneven brightness for each product beforehand, the maximum value for the maximum unevenness amount at which uneven brightness does not occur can be determined.

If the calculated maximum unevenness amount is smaller than the standard value (for example, 50 µm), it is judged as acceptable and becomes a product (step 107). In conventional judgments by the amount of unevenness alone, this judgment ends the process and the reflecting base material 7 exceeding the standard value will be disposed.

In the present invention, for the ones for which the maximum unevenness amount exceeded the standard value, the unevenness information is Fourier transformed, and the relationship between frequency and intensity is obtained for the surface unevenness profile of the reflecting base material (step 103). The above step 102 may be abbreviated, and the evaluation from 103 on may be performed for all test subjects. Further, as mentioned previously, a process for cutting the reflecting base material 7 to a given length (product size) may be added prior to this process.

Here, the frequency not only depends on the unevenness profile of the reflecting base material 7, but on the traveling speed of the laser displacement gauge 3 (measurement speed of the unevenness profile) against the reflecting base material 7, as well. For this reason, the traveling speed of the laser displacement gauge 3 is predetermined. As for the traveling speed of the laser displacement gauge 3, it may be, for example, about 200 mm/s or less. Here, the unevenness information obtained is Fourier transformed, and the relationship between frequency and intensity is obtained; however, the obtained frequency may be converted to wavelength, taking into consideration the measurement conditions of the laser displacement gauge 3.

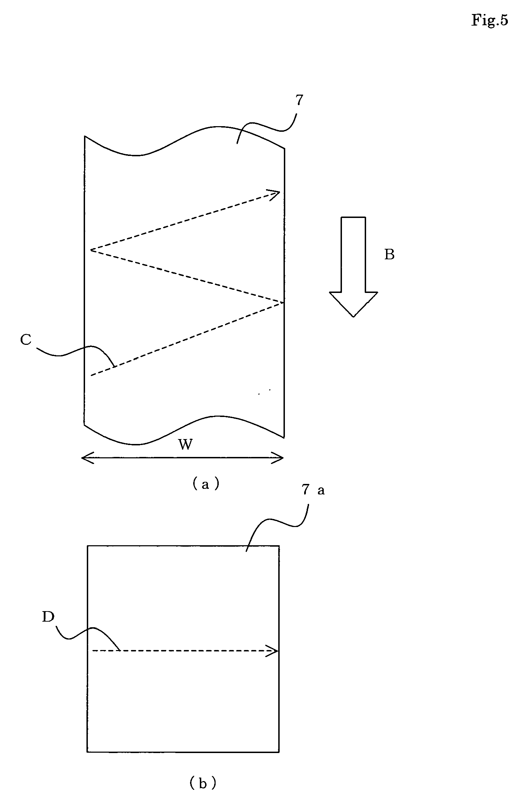

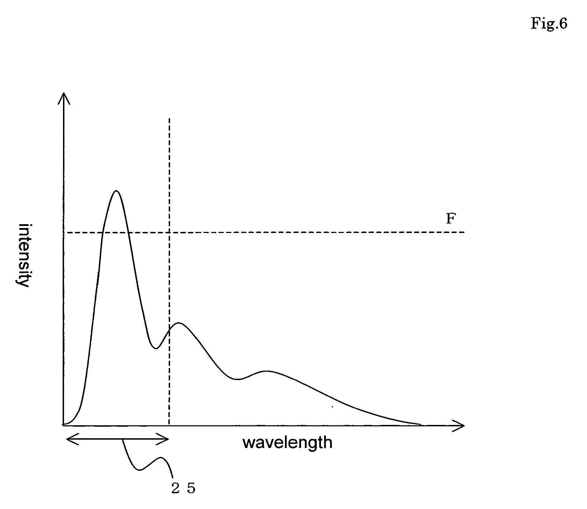

As shown in Fig.5(a), when the laser displacement gauge is moved back and forth along the direction of the width of the reflecting base material 7 while the reflecting base material 7 travels to the traveling direction (the direction of arrow B in the figure), the measuring part of the laser displacement gauge (measuring direction) will not coincide with the direction of the width of reflecting base material 7, but becomes diagonal according to the traveling speed of reflecting base material 7 (direction C in the figure). On the other hand, as shown in Fig.6(b), when the same measurement is performed while the reflecting base material 7a is fixed, the measuring part coincides with the direction of the width of the reflecting base material 7 (direction D in the figure).

However, in the present invention, as described previously, when the laser displacement gauge 3 is moved to the direction of the width while reflecting base material 7 is traveling, the unevenness information that is actually obtained by measuring diagonally is defined as the unevenness information of the direction of the width. That is, the unevenness information detected does not necessarily have to be information from the direction strictly vertical to the direction of the width of the reflecting base material 7, and unevenness information measured slightly diagonal to the direction of the width of the reflecting base material 7 may be treated as unevenness information for the direction of the width of the reflecting base material.

Next, the relationship between the calculated frequency (wavelength) and intensity (wave information) is compared with a predetermined standard data (step 104). That is, the intensity in a given range of frequency (wavelength) domain is compared to the numerical value in a standard data. The standard data is dependent on the number of measurement points of the unevenness in the direction of the width; when the measurement points is 128 points, as for the standard data, the intensity at a given range of frequency (wavelength) is, for example, 0.6 or less. As the measurement points increase as 128, 256, 512, ..., the numerical value of the standard data (the intensity at a given range of frequency(wavelength)) may be increased as 0.6, 1.2, 2.4 ... (for example, when the number of measurement points is N, the standard data = 0.6N/128).

For this standard data, the intensity at which uneven brightness does not occur at a given frequency may be obtained, by examining the intensity and the tendency of occurrence of uneven brightness beforehand for each target product according to measurement conditions. As for the following example, a case where the measurement points are 128 points and the standard data is an intensity of 0.6 will be described.

Next, as the intensity of said domain, whether or not there is a data exceeding 0.6 (the standard data) is judged (step 105). If the intensity exceeds 0.6 (the standard data), a judgment of rejection is made, and the reflecting base material is disposed (step 106). On the other hand, if there is no data exceeding 0.6 (the standard data) throughout the entire judgment domain, a judgment of acceptance is made, and becomes a product (step 107).

Fig.6 is a conceptual diagram showing the comparison between wave information and standard data for judging acceptance or rejection. As described previously, the wave information obtained is shown as a relationship between wavelength (or frequency) and intensity. Whether it is accepted or rejected is determined by whether or not there is data exceeding the standard data (F in the figure) at the evaluation range 25, which is the wavelength range (or frequency range) that is to be the target of evaluation.

That is, at the evaluation range 25, if there is a data that exceeds the standard value, it is rejected, and if there is none, it is accepted. That is, for areas other than the evaluation range 25, no judgment on intensity is necessary. As for the evaluation range 25, a range of wavelength (frequency) at which uneven brightness does not occur may be set, by examining the tendency of occurrence of uneven brightness in relation to intensity at each wavelength (frequency), beforehand. For example, when a given wavelength can be set as the evaluation range, the unevenness profile for wavelengths longer than that would have little effect on uneven brightness, and can thus be disregarded from the evaluation range. The evaluation range may be, for example, a wavelength of 128 mm or less.

As described previously, the standard data should be determined beforehand, by preparing samples of reflecting base materials with unevenness profile of varying frequency and size, assembling into a backlight unit, confirming occurrence of uneven brightness by visual inspection, and identifying the frequency (wavelength) and the intensity in relation to the number of measurement points at which uneven brightness occur.

If the judgment is made according to the wave information while the reflecting base material is in coil form, the judgment may be made repeatedly at a given interval, or made consecutively. Further, in the above embodiment, the maximum unevenness amount and the specific wavelength at which uneven brightness occur was determined using information obtained by one laser displacement gauge 3; however, a separate maximum unevenness amount measuring device may be installed upstream of the laser displacement gauge 3 for judging the maximum unevenness amount.

According to the present invention, a reflecting base material 7 with which uneven brightness do not occur can reliably be obtained. Especially, while a simple evaluation by maximum unevenness amount can lead to excessive quality, by determining the intensity of the unevenness component in the frequency (wavelength) domain at which adverse affect on uneven brightness tend to occur, for example, unevenness profiles that do not affect uneven brightness can be treated as acceptable.

### Examples

Next, an example of evaluation of a reflecting base material obtained by the production method of the present invention will be described. The reflecting base material of subject was produced as follows.

First, to 100 parts by weight of polyethylene terephthalate (Japan Unipet Co., Ltd, RT-553C), 2 parts by weight of polyester-type elastomer (Mistubishi Chemical Corporation, Premalloy (registered trademark) B1942N) was added, kneaded, then molded into a sheet of 0.48 mm thickness x 540 mm width x 355 m length. This resin sheet and a separator of olefin-type non-woven cloth was layered, and rolled into a roll form, so as to prevent the surface of the resin sheet from touching one another.

Subsequently, said roll was inserted into a pressure vessel, and pressurized to 5.2 MPa with carbon dioxide to infiltrate carbon dioxide into the resin sheet. The infiltration time of carbon dioxide to the resin sheet was set to 35 hours. Next, the roll was taken out of the pressure vessel, and foaming was performed by removing the separator and continuously providing the resin sheet alone to a hot air circulation-type foaming oven set at 220 °C. The foam obtained was evenly foamed and was fine with an average bubble size of 0.9 µm. The thickness of the foam was 0.7 mm, and the total reflectivity of the foam was 99.9%.

The foamed base material was compressed at a compression degree of 0.73, so that the thickness became 0.51 mm, and stretched to a stretching degree of 1.5.

A plurality of samples with a width of 520 mm was obtained by cutting the compressed/stretched reflecting base material; the surface unevenness was measured for 128 points of the reflecting base material by moving a laser displacement gauge at a speed of 50 mm/s, and a pitch of about 4 mm, along the direction of the width (the direction vertical to the longitudinal direction of the production process), at a given height, and each was evaluated by the aforementioned method.

Further, a backlight unit was temporarily assembled with the evaluated reflecting base material, and the brightness of the display surface was evaluated. The backlight unit consisted of a reflecting base material, then a light guiding panel, a first diffusion film, a prism sheet, and a second diffusion film, successively. On the side of the light guiding panel was placed an LED (Light Emitting Diode) as a light source of an edge light method. As for the prism sheet, a PET sheet of 0.30 mm thickness was used; the first diffusion film was of PET of 0.31 mm thickness, the second diffusion film was of PET of 0.38 mm thickness, and the light guiding panel was of acrylic of 4.0 mm thickness.

On the front side of the light guiding panel was installed a two dimensional color analyzer (Konica Minolta Sensing, Inc. CA 2000), with which the brightness of the entire surface of the light guiding panel was measured. The brightness obtained was subjected to color tone image processing, and the occurrence of uneven brightness was visually evaluated based on the image. For example, evaluation was made by visually checking for change in brightness inconsistent to its surrounding, and partial change in brightness. The results are shown in Table 1.

**[Table1]**

| No. | maximum unevenness amount below 50 µm | maximum intensity/wavelength at maximum intensity | this evaluation | uneven brightness |
|---|---|---|---|---|
| 1 | No | 0.7 / 32 mm | Bad | Bad |
| 2 | No | 0.5 / 32 mm | Good | Good |
| 3 | No | 0.6 / 50 mm | Good | Good |
| 4 | No | 0.7 / 50 mm | Bad | Bad |
| 5 | No | 0.7 / 128 mm | Bad | Bad |
| 6 | No | 0.7 / 130 mm | Good | Good |

In Table 1, "maximum unevenness amount below 50 µm" refers to the maximum unevenness amount examined for each test sample, and those that exceeded 50 µm were marked as "No". In the above example, only those whose maximum unevenness amount exceeded 50µm were considered. As described previously, when the maximum unevenness amount was 50 µm or smaller, no uneven brightness occurred. Further, the "maximum intensity/wavelength at maximum intensity" shows the maximum intensity of the wave obtained by Fourier transforming the wave information of the unevenness profile obtained by the aforementioned method, and the wavelength at which said maximum intensity is obtained. (The wavelength was obtained from the frequency and the measurement conditions.)

Further, in "this evaluation", the standard data was set as 0.6, and if an intensity exceeding 0.6 was found in a domain of wavelength lower than or equal to 128 mm, it was marked as " Bad "; if the intensity was below 0.6 in the same domain, it was marked as " Good ". Further, in "uneven brightness", a backlight unit was actually temporarily assembled, the brightness of the display surface was evaluated, and those for which uneven brightness were found visually were marked as " Bad ", while those for which uneven brightness were not found was marked as " Good ".

As shown in Table 1, even when the maximum unevenness amount exceeded 50 µm, depending on the property of the unevenness, there were examples for which uneven brightness did not occur. For example, in No.2 and No.3, the intensity was below 0.6, and there were no uneven brightness. Further, in No.6, the intensity was above 0.6, but because the wavelength exceeded 128 mm, no uneven brightness occurred. That is, uneven brightness did not occur for unevenness of wavelength components above a certain degree.

On the other hand, in No.1, No.4, and No.5, because the intensity of the range less than or equal to 128 mm exceeded 0.6, uneven brightness occurred.

Although favorable embodiments for the present invention have so far been described in detail with reference to the accompanying figures, the technical scope of the present invention is not influenced by the aforementioned embodiments. It should be understood by those in the field that examples of various changes and modifications are included within the realm of the technical idea of the present invention, and that such examples should obviously be included in the technical scope of the present invention.

### List of Reference Signs

- 1: reflecting base material production apparatus
- 3: laser displacement gauge
- 5: analyzing apparatus
- 7: reflecting base material
- 10: reflecting base material
- 11: unevenness
- 13: display
- 15: uneven brightness

## Claims

1. A reflecting base material for a backlight unit, wherein
the intensity of the wave component with a wavelength of 128 mm or less is 0.6N/128 or less, when
a plurality of points in the width direction of the reflecting base material is measured to obtain surface unevenness data, which is then Fourier transformed, thereby obtaining the relationship between frequency and intensity, and the number of points measured is N.

2. The reflecting base material of Claim 1, wherein the maximum unevenness amount for said surface unevenness data is less than or equal to 50 µm.

3. The reflecting base material of Claim 1, which contains fine bubbles inside, has a thickness of 0.2 mm or more, a reflectivity of 90% or more, and a crystallinity of 30% or more.

4. The reflecting base material of Claim 1, wherein soft beads are applied on to its surface.

5. A backlight unit, which comprises
the reflecting base material of any one of Claims 1 to 4,
a light guiding panel arranged on said reflecting base material, and
a light source arranged lateral to said light guiding panel.

6. A method for manufacturing a foam reflecting base material for a backlight unit, which comprises:
a process of foaming a base material, and
a process for stretching at a stretching degree of 1.1 to 1.8, while at the same time compressing at a compression degree of 0.6 to 0.8; wherein
said base material is determined as accepted when a surface unevenness information is obtained by measuring a plurality of points in the width direction of the base material obtained,
the surface unevenness information obtained is Fourier transformed to obtain a relationship between frequency and intensity, and
the intensity for the frequency corresponding to a wavelength of 128 mm or less for N points, which is the number of points measured, are all less than or equal to 0.6N/128.
